(19) 

Europäisches Patentamt
European Patent Office
Office européen des brevets

(11) **EP 3 868 572 A1**

(12) **EUROPEAN PATENT APPLICATION**
published in accordance with Art. 153(4) EPC

(43) Date of publication:
**25.08.2021 Bulletin 2021/34**

(21) Application number: **19873740.5**

(22) Date of filing: **16.10.2019**

(51) Int Cl.:
**B60C 9/00** (2006.01)　　　　**B60C 9/20** (2006.01)
**B60C 9/22** (2006.01)　　　　**D02G 3/28** (2006.01)
**D02G 3/48** (2006.01)　　　　**D07B 1/02** (2006.01)
**D07B 1/06** (2006.01)

(86) International application number:
**PCT/JP2019/040768**

(87) International publication number:
**WO 2020/080447 (23.04.2020 Gazette 2020/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.10.2018 JP 2018196214**

(71) Applicant: **BRIDGESTONE CORPORATION**
**Chuo-ku**
**Tokyo 104-8340 (JP)**

(72) Inventor: **SASAKI, Yosuke**
**Tokyo 104-8340 (JP)**

(74) Representative: **Oxley, Robin John George**
**Marks & Clerk LLP**
**15 Fetter Lane**
**London EC4A 1BW (GB)**

(54) **TIRE**

(57)　To provide a tire that is not only improved in durability, steering stability, and low rolling resistance in high-speed driving but also excellent in tire productivity. A tire including a pair of bead cores (11), a carcass including at least one carcass ply (12) extending between the pair of bead cores (11), a belt (13) including at least one belt layer placed outward in a tire radial direction of the carcass, and at least one belt reinforcement layer (14) placed outward in a tire radial direction of the belt (13), in which a reinforcement cord of at least one of the carcass ply (12) and the belt reinforcement layer (14) includes a cord using a polyamide multifilament including a polycondensate of a dicarboxylic acid including an aromatic dicarboxylic acid with a diamine.

FIG. 1

EP 3 868 572 A1

## Description

TECHNICAL FIELD

The present invention relates to a tire, and specifically relates to a tire that is not only improved in durability, steering stability and low rolling resistance in high-speed driving, but also excellent in tire productivity.

BACKGROUND ART

In recent years, environmental problems such as global warming associated with an increase in $CO_2$ emissions, and resource depletion problems have been increasingly serious. Therefore, tires have been required to be light in weight and low in fuel cost. Tires have been conventionally improved and developed actively in terms of shapes, structures, and rubber characteristics such as treads, and weight reduction and low fuel cost have been achieved by, for example, a reduction in amount of rubber used and a reduction in rolling resistance of tires. Since rubber members are largely involved in rolling resistance, there have been studied and optimized about, for example, a reduction in loss of rubber members by themselves, such as tread rubber, bead filler rubber, belt coating rubber, and bead filler rubber, and a reduction in strain of shapes, structures, and the like of such rubber members.

As a reduction in loss of rubber members by themselves has progressed, recently involvement of any loss due to a dynamic cyclic strain of any member other than rubber members in rolling resistance has been non-negligible. Examples of such any member other than rubber members include carcass ply layers, belt layers, and belt reinforcement layers, in particular, belt reinforcement layers are largely varied in strain in rolling and ground-contacting, and thus there is a demand for a technique for reducing the loss of belt reinforcement layers. In such a circumstance, Patent Document 1 has proposed a reinforcement cord material that can be suitably used as a cap ply layer (belt reinforcement layer) in a tire, which is excellent in mechanical characteristics such as rigidity, heat characteristics, and the like, and which is reduced only in loss.

RELATED ART DOCUMENT

PATENT DOCUMENT

Patent Document 1: JP 2002-103913A

SUMMARY OF THE INVENTION

PROBLEMS TO BE SOLVED BY THE INVENTION

There are currently used organic fibers such as polyester, rayon, and nylon for reinforcement members of tires. In particular, nylon fibers, which are polyamide fibers, have the advantages of excellent adhesiveness to rubber as compared with other fibers and also excellent fatigue resistance. Accordingly, if polyamide fibers can be enhanced in rigidity at high temperatures, it is also possible to improve durability and steering stability in high-speed driving with the above advantage being utilized, and there is currently a demand for further improvement in the future.

An object of the present invention is to provide a tire that is not only improved in durability, steering stability, and low rolling resistance in high-speed driving but also excellent in tire productivity.

MEANS FOR SOLVING THE PROBLEMS

The present inventor has made intensive studies in order to solve the above problems, and as a result, has found that the above problems can be resolved by use of a cord using a polyamide multifilament having a predetermined structure, as a reinforcement cord for a carcass ply and/or a belt reinforcement layer, thereby leading to completion of the present invention.

That is, the tire of the present invention is a tire including a pair of bead cores, a carcass including at least one carcass ply extending between the pair of bead cores, a belt including at least one belt layer placed outward in a tire radial direction of the carcass, and at least one belt reinforcement layer placed outward in a tire radial direction of the belt, wherein a reinforcement cord of at least one of the carcass ply and the belt reinforcement layer includes a cord using a polyamide multifilament including a polycondensate of a dicarboxylic acid including an aromatic dicarboxylic acid with a diamine.

In the tire of the present invention, the diamine is preferably at least one of an aliphatic diamine and an alicyclic diamine. In addition, in the tire of the present invention, the glass transition temperature of the reinforcement cord taken out from the tire is preferably 80 to 230°C. Moreover, in the tire of the present invention, the ratio of the dynamic elastic modulus E' (100°C) at 100°C and the dynamic elastic modulus E' (25°C) at 25°C of the reinforcement cord taken out from the tire, E' (100°C)/E' (25°C), is preferably 0.7 to 1.0. Furthermore, in the tire of the present invention, the moisture content in the reinforcement cord taken out from the tire is preferably 0.1 to 2.0% by mass.

In addition, in the tire of the present invention, the ratio of the loss tangent tan δ (25°C) at 25°C and the loss tangent tan δ (100°C) at 100°C of the reinforcement cord taken out from the tire, tan δ (25°C)/tan δ (100°C), is preferably 0.7 to 1.0. Moreover, in the tire of the present invention, the loss tangent tan δ (25°C) at 25°C of the reinforcement cord taken out from the tire is preferably 0.01 to 0.06. Furthermore, in the tire of the present invention, the ratio of the aromatic dicarboxylic acid to the dicarboxylic acid in the reinforcement cord is preferably 50% by mol or more. In addition, in the tire of the present invention, one can be suitably used where the ratio of a dicarboxylic acid having one aromatic ring to the aromatic dicarboxylic acid is 20% by mol or more, the ratio of a dicarboxylic acid having two aromatic rings to the aromatic dicarboxylic acid is 20% by mol or more, or the ratio of a dicarboxylic acid having three aromatic rings to the aromatic dicarboxylic acid is 20% by mol or more. Moreover, in the tire of the present invention, the ratio of a diamine having 7 to 12 carbon atoms to the diamine is preferably 20% by mol or more. Furthermore, in the tire of the present invention, the reinforcement cord is preferably a hybrid cord of the polyamide multifilament and at least one fiber selected from the group consisting of a polyester fiber, a nylon fiber, an aramid fiber, a polyketone fiber, a glass fiber, a carbon fiber, a poly-p-phenylenebenzobisoxazole fiber, and a polyarylate fiber.

In addition, in the tire of the present invention, the reinforcement cord taken out from the tire preferably has a primary twist coefficient α1 of 0.1 to 0.9 and a final twist coefficient α2 of 0.1 to 1.2, as represented by the following expressions (1) and (2):

$$\alpha 1 = N1 \times \sqrt{(0.125 \times D1/\rho)} \times 10^{-3} \quad (1)$$

$$\alpha 2 = N2 \times \sqrt{(0.125 \times D2/\rho)} \times 10^{-3} \quad (2)$$

where N1 represents the number of primary twists [twists/10 cm], D1 represents the fineness [dtex] of one primary twist yarn, N2 represents the number of final twists [twists/10 cm], D2 represents the total fineness [dtex] of the cord, and p represents the density [g/cm$^3$] of the reinforcement cord. Moreover, in the tire of the present invention, preferably, the α1 is 0.1 to 0.5 and the α2 is 0.1 to 0.7. Furthermore, in the tire of the present invention, the total fineness of the reinforcement cord is preferably 1000 to 8000 dtex. In addition, in the tire of the present invention, the number of primary twists in the reinforcement cord is preferably 10 to 30 twists/10 cm. Moreover, in the tire of the present invention, the number of final twists in the reinforcement cord is preferably 10 to 30 twists/10 cm. Furthermore, in the tire of the present invention, the belt reinforcement layer is preferably at least one of a cap layer placed wider than the entire width of the belt and a pair of layered layers covering both end portions of the belt.

The tire of the present invention is suitably one where the belt layer is obtained by coating a metal cord including a bundle of 2 to 10 metal filaments not twisted but arranged in parallel in one row, with an elastomer, and at least one pair of adjacent metal filaments different in at least one of the amount of shaping and the shaping pitch in a direction perpendicular to the extending direction of the metal filaments is present in the metal cord. In the tire of the present invention, the shaping direction of metal filaments shaped in the metal cord is preferably the width direction of the metal cord. In the tire of the present invention, the elastomer coverage in a side surface in the width direction of the metal cord, of the adjacent metal filaments, is preferably 10% or more per 50 mm. In the tire of the present invention, at least one metal filament in the metal cord is preferably a substantially straight metal filament. In the tire of the present invention, the straight metal filament and a metal filament shaped are preferably alternately placed. In the tire of the present invention, metal filaments placed at both ends of the metal cord are each preferably the straight metal filament. In the tire of the present invention, preferably, the amount of shaping of the metal filaments is 0.03 to 0.30 mm and the shaping pitch of the metal filaments is 2 to 30 mm.

The tire of the present invention is also suitably one where the belt layer is obtained by coating a metal cord including a bundle of 2 to 10 metal filaments not twisted but arranged in parallel in one row, with an elastomer, the metal filaments are shaped at the same amount of shaping and the same pitch, and at least one pair of metal filaments different in phase between adjacent metal filaments is present in the metal cord. In the tire of the present invention, the phase difference between the adjacent metal filaments is preferably π/4 to 7π/4. In addition, in the tire of the present invention, the elastomer coverage in a side surface in the width direction of the metal cord, of the adjacent metal filaments, is preferably 10% or more per unit length. Moreover, in the tire of the present invention, preferably, the amount of shaping of the metal filaments is 0.03 to 0.30 mm and the shaping pitch of the metal filaments is 2 to 10 mm.

The tire of the present invention is suitable for a passenger car tire.

The tan δ of the reinforcement cord is here a value measured with, for example, Rheographsolid, Rheovibron, or a spectrometer in conditions of a reinforcement cord length of 5 cm, a predetermined temperature, a measurement frequency of 10 Hz, a static tension of 100 g, and a dynamic cyclic strain of 1000 $\mu$m. The glass transition temperature (Tg) is a value measured with differential scanning calorimetry (DSC). Moreover, the dynamic elastic modulus E' of the reinforcement cord can be measured in the same conditions as in measurement of the tan $\delta$ of the reinforcement cord. Furthermore, "the ratio of the dicarboxylic acid having one aromatic ring to the aromatic dicarboxylic acid is 20% by mol or more" means that "the ratio of the structural unit derived from the aromatic dicarboxylic acid to the structural unit derived from the raw material monomer component is 10% by mol or more". Much the same is true on "the ratio of the dicarboxylic acid having two aromatic rings to the aromatic dicarboxylic acid is 20% by mol or more", "the ratio of the dicarboxylic acid having three aromatic rings to the aromatic dicarboxylic acid is 20% by mol or more", and "the ratio of the diamine having 7 to 12 carbon atoms to the diamine is 20% by mol or more".

EFFECTS OF THE INVENTION

According to the present invention, there is provided a tire that is not only improved in durability, steering stability and low rolling resistance in high-speed driving, but also excellent in tire productivity.

BRIEF DESCRIPTION OF THE DRAWINGS

FIG. 1 is a schematic cross-sectional view in the tire width direction of a tire according to one suitable embodiment of the present invention.
FIG. 2 is a partial cross-sectional view in the width direction of a belt layer of a tire according to one suitable embodiment of the present invention.
FIG. 3 is a schematic plan view of a metal cord of a belt layer in one suitable embodiment of a belt in the tire of the present invention.
FIG. 4 is a schematic cross-sectional view in the width direction of a metal cord of a belt layer of a tire according to one suitable embodiment of the present invention.
FIG. 5 is an illustrative view of each metal filament representing the definitions of the amount h of shaping and the shaping pitch p with respect to each metal filament in a tire according to one suitable embodiment of the present invention.
FIG. 6 is another exemplary schematic cross-sectional view in the width direction of a metal cord of a belt layer of a tire according to one suitable embodiment of the present invention.
FIG. 7 is a partial cross-sectional view in the width direction of a belt layer of a tire according to another suitable embodiment of the present invention.
FIG. 8 is a schematic plan view of a metal cord of a belt layer of a tire according to another suitable embodiment of the present invention.
FIG. 9 is a schematic cross-sectional view in the width direction of a metal cord of a belt layer of a tire according to another suitable embodiment of the present invention.
FIG. 10 is an illustrative view of each metal filament representing the definitions of the amount h of shaping and the shaping pitch p with respect to each metal filament in a tire according to another suitable embodiment of the present invention.
FIG. 11 is another exemplary schematic cross-sectional view in the width direction of a metal cord of a belt layer of a tire according to another suitable embodiment of the present invention.
FIG. 12 is still another exemplary schematic cross-sectional view in the width direction of a metal cord of a belt layer of a tire according to another suitable embodiment of the present invention.

MODE FOR CARRYING OUT THE INVENTION

Hereinafter, the tire of the present invention will be described in detail with reference to the drawings.

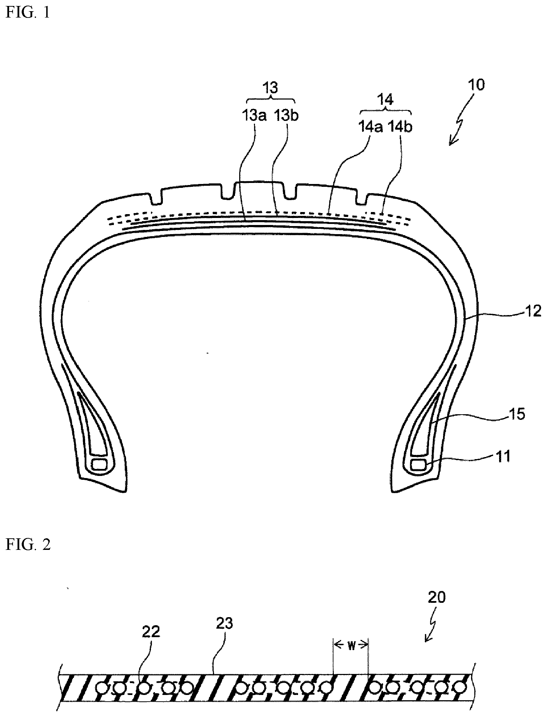

FIG. 1 is a schematic cross-sectional view in the tire width direction of a tire according to one suitable embodiment of the present invention. The tire 10 of the present invention is a tire that includes a carcass including at least one layer (one layer in the illustrated example) of carcass ply 12 extending between a pair of bead cores 11, , a belt 13 including at least one belt layer (two belt layers 13a and 13b in the illustrated example) placed outward in the tire radial direction of the carcass, , and at least one belt reinforcement layer 14 placed outward in the tire radial direction of the belt 13.
In the illustrated example, a bead filler 15 is placed outward in the tire radial direction of the bead core 11, and the belt reinforcement layer 14 includes a cap layer 14a placed so as to cover the entire of the belt 13 and a pair of layered layers 14b placed so as to cover only both end portions of the cap layer 14a. While the cap layer 14a is placed from one tire half toward the other tire half so as to extend across the tire equator plane, the layered layers are configured from the pair of layered layers 14b placed, without crossing the tire equator plane, so as to cover only end portions of the cap layer 14a in respective tire half portions thereof. The belt 13 here usually includes a rubberized layer of a cord which extends with being sloped relative to the tire equator plane, preferably, a rubberized layer of a steel cord, and the two belt layers 13a and 13b in the illustrated example are stacked so that cords constituting the belt layers 13a and 13b are mutually crossed with the equator plane being sandwiched therebetween, and thus constitute the belt 13. Such cords (for example, steel cords) constituting the belt 13 can be sloped at an angle of, for example, 20 degrees or more and 40 degrees relative to the tire circumference direction. The belt reinforcement layer 14 may include both the cap layer 14a and the layered layer 14b, or may include only the cap layer 14a or the layered layer 14b. Moreover, two or more of such cap layers 14a and/or two or more of such layered layers 14b may also be combined. The belt reinforcement layer 14 here usually includes a rubberized layer of a cord aligned substantially in parallel to the tire circumference direction.

In the tire 10 of the present invention, a reinforcement cord of at least one of the carcass ply 12 and the belt reinforcement layer 14 includes a cord using a polyamide multifilament including a polycondensate of a dicarboxylic acid including an aromatic dicarboxylic acid with a diamine. In particular, a cord (semi-aromatic polyamide cord) is preferable, which uses a multifilament (semi-aromatic polyamide multifilament) including a polyamide (hereinafter, also referred to as "semi-aromatic polyamide") using at least one of an aliphatic diamine and an alicyclic diamine, as the diamine. While nylon 66 is generally used in a reinforcement cord of the carcass ply 12 and the belt reinforcement layer 14, such a reinforcement cord is low in glass transition temperature Tg (50°C) and thus is low in rigidity at a high temperature and is not excellent in steering stability. On the other hand, a reinforcement cord using an aramid fiber can secure rigidity at a high temperature, but is too high in rigidity and has the problem of being remarkably poor in tire production properties.

On the contrary, a polyamide including a polycondensate of a dicarboxylic acid including an aromatic dicarboxylic acid with a diamine, in particular, a semi-aromatic polyamide is high in Tg due to intermolecular interaction and furthermore is also appropriate in rigidity, and thus can be used in a reinforcement cord of the carcass ply 12 and the belt reinforcement layer 14, resulting in enhancements in durability and steering stability in high-speed driving without any loss of tire productivity. In addition, such a polyamide is small in loss tangent tan $\delta$ in a tire use region and is advantageous for low rolling resistance of the tire. Moreover, a polyamide fiber including an alicyclic dicarboxylic acid and an aliphatic diamine is high in water absorbability and low in physical property stability. On the contrary, a semi-aromatic polyamide fiber is low in polymer water absorbability and thus can also secure physical property stability.

In a case where the reinforcement cord is applied to only one of the carcass ply 12 and the belt reinforcement layer 14 in the tire 10 of the present invention, a known reinforcement cord commonly used can be applied to the other thereof. For example, the reinforcement cord (for example, semi-aromatic polyamide cord) can be used in a cord constituting the belt reinforcement layer 14 and an organic fiber cord (for example, nylon or polyethylene terephthalate (PET) cord) other than the reinforcement cord can be used in a cord constituting the carcass ply 12. Alternatively, for example, the reinforcement cord (for example, semi-aromatic polyamide cord) can be used in a cord constituting the carcass ply 12 and an organic fiber cord (for example, nylon or PET cord) other than the reinforcement cord can be used in a cord constituting the belt reinforcement layer 14. In a case where the belt reinforcement layer 14 has the cap layer 14a and the layered layer 14b, the reinforcement cord can also be used for only one of the cap layer 14a and the layered layer 14b. For example, the reinforcement cord (for example, semi-aromatic polyamide cord) can be used in a cord constituting the layered layer 14b and an organic fiber cord (for example, nylon or PET cord) other than the reinforcement cord can be used in a cord constituting the cap layer 14a.

In the tire 10 of the present invention, the Tg of the reinforcement cord taken out from the tire 10 is preferably 80 to 230°C. Such a cord high in Tg can be thus used in a reinforcement cord of at least one of the carcass ply 12 and the belt reinforcement layer 14, resulting in a decrease in loss tangent tan $\delta$ in a tire use region and an improvement in rolling resistance of the tire. In addition, rigidity can be ensured also at a high temperature, and thus steering stability at a high speed can be enhanced. The Tg is suitably 100 to 160°C.

In addition, in the tire 10 of the present invention, the ratio of the loss tangent tan $\delta$ (25°C) at 25°C and the loss tangent tan $\delta$ (100°C) at 100°C of the reinforcement cord taken out from the tire 10, as the value of tan $\delta$ (25°C)/tan $\delta$ (100°C), is preferably 0.7 to 1.0. In particular, the loss tangent tan $\delta$ (25°C) at 25°C of the reinforcement cord taken out from the tire is preferably 0.01 to 0.06. Such a reinforcement cord is low in tan $\delta$ at a high temperature and thus can suppress generation of heat and can enhance durability of the tire at a high speed. The value of tan $\delta$ (25°C)/tan $\delta$ (100°C) is suitably 0.85 to 1.0.

Moreover, in the tire 10 of the present invention, the ratio of the dynamic elastic modulus E' (100°C) at 100°C and the dynamic elastic modulus E' (25°C) at 25°C of the reinforcement cord taken out from the tire 10, as the value of E' (100°C)/E' (25°C), is preferably 0.7 to 1.0. The value of E' (100°C)/E' (25°C) is in the range, thereby enabling steering stability at a high temperature to be more favorable. In particular, the dynamic elastic modulus E' (25°C) at 25°C of the reinforcement cord taken out from the tire is preferably 0.7 to 0.8.

Furthermore, in the tire 10 of the present invention, the moisture content in the reinforcement cord taken out from the tire 10 is preferably 0.1 to 2.0% by mass. As described above, the reinforcement cord in the tire 10 of the present invention, in particular, the semi-aromatic polyamide fiber is low in water absorbability and thus can also ensure physical property stability thereof. In particular, one where the moisture content is 0.1 to 2.0% by mass can allow the effects of the present invention to be favorably obtained.

The value of tan $\delta$ (25°C)/tan $\delta$ (100°C) and the value of E' (100°C)/E' (25°C) of the reinforcement cord can be herein adjusted by appropriately selecting the type of the reinforcement cord, the number of twists, immersion conditions during immersion in an adhesive to be applied to the surface of the reinforcement cord, the type of the adhesive, and heat treatment conditions after treatment with the adhesive. In addition, in the tire 10 of the present invention, the number of yarns in the reinforcement cord in the carcass ply 12 and the belt reinforcement layer 14, can be appropriately set depending on the strength of the reinforcement cord, and can be, for example, 20 to 100 yarns/50 mm.

In the tire 10 of the present invention, the reinforcement cord taken out from the tire preferably has a primary twist coefficient $\alpha 1$ of 0.1 to 0.9 and a final twist coefficient $\alpha 2$ of 0.1 to 1.2, as represented by the following expressions (1) and (2):

$$\alpha 1 = N1 \times \sqrt{(0.125 \times D1/\rho)} \times 10^{-3} \quad (1)$$

$$\alpha 2 = N2 \times \sqrt{(0.125 \times D2/\rho)} \times 10^{-3} \quad (2).$$

Here, N1 represents the number of primary twists [twists/10 cm], D1 represents the fineness [dtex] of one primary twist yarn, N2 represents the number of final twists [twists/10 cm], D2 represents the total fineness [dtex] of the cord, and p represents the density [g/cm$^3$] of the reinforcement cord. The polyamide multifilament in the present invention, in particular, the semi-aromatic polyamide multifilament is twisted, thereby averaging the strength utilization rate and enhancing fatigue properties. In particular, the above conditions are satisfied, thereby enabling both rigidity and fatigue properties of the reinforcement cord to be satisfied. The tension in twisting is here preferably 0.01 to 0.2 cN/dtex.

Moreover, in the tire 10 of the present invention, preferably, the $\alpha 1$ is 0.1 to 0.5 and the $\alpha 2$ is 0.1 to 0.7. Such conditions are satisfied, thereby enabling both rigidity and fatigue properties of the reinforcement cord to be satisfied at high levels. In particular, the number N1 of primary twists and the number N2 of final twists in the reinforcement cord are preferably 10 to 30 twists/10 cm and 10 to 30 twists/10 cm, respectively.

The total fineness in the reinforcement cord in the tire 10 of the present invention is preferably 1000 to 8000 dtex. The total fineness is 1000 dtex or more, thereby enabling strength to be sufficiently secured. On the other hand, it is preferably 8000 dtex or less, more preferably 5000 dtex or less from the viewpoints of spinnability and post-processing.

In the tire 10 of the present invention, the reinforcement cord of the carcass ply 12 and the belt reinforcement layer 14, here used, may be a cord including the polyamide multifilament, in particular, the semi-aromatic polyamide multifilament, and a cord such as a hybrid cord used in combination with other fibers may also be used. Examples of such other fiber can include at least one fiber selected from the group consisting of a polyester fiber, a nylon fiber, an aramid fiber, a polyketone fiber, a glass fiber, a carbon fiber, a poly-p-phenylenebenzobisoxazole fiber and a polyarylate fiber.

Next, the materials and production method of the cord using a polyamide multifilament including a polycondensate of a dicarboxylic acid including an aromatic dicarboxylic acid with a diamine in the tire 10 of the present invention will be described in detail.

<Dicarboxylic acid>

The polyamide multifilament for use in the reinforcement cord in the tire 10 of the present invention is a polyamide multifilament including a polycondensate of a dicarboxylic acid including an aromatic dicarboxylic acid with a diamine, in particular, a semi-aromatic polyamide multifilament, in which the ratio of the aromatic dicarboxylic acid to the dicarboxylic acid is preferably at least 50% by mol or more, more preferably 60% by mol or more, further preferably 70% by mol or more. Thus, a polyamide multifilament high in Tg and fiber strength and excellent in spinnability can be obtained.

The aromatic dicarboxylic acid is not particularly limited and can be appropriately selected for any purpose, and examples thereof include terephthalic acid, isophthalic acid, naphthalenedicarboxylic acid, 2-chloroterephthalic acid, 2-methylterephthalic acid, 5-methylisophthalic acid, and 5-sodium sulfoisophthalic acid, which are aromatic dicarboxylic acids having 8 to 20 carbon atoms and may be unsubstituted or substituted with any of various substituents. These may be used singly or in combination of two or more kinds thereof.

For example, an alicyclic dicarboxylic acid having an alicyclic structure and having 3 to 10 carbon atoms or a linear or branched aliphatic dicarboxylic acid having 3 to 20 carbon atoms can be used as a dicarboxylic acid other than the aromatic dicarboxylic acid in the polyamide multifilament for use in the reinforcement cord in the tire 10 of the present invention.

Specific examples of the alicyclic dicarboxylic acid having an alicyclic structure and having 3 to 10 carbon atoms can include 1,4-cyclohexanedicarboxylic acid, 1,3-cyclohexanedicarboxylic acid, and 1,3-cyclopentanedicarboxylic acid. The alicyclic dicarboxylic acid in the reinforcement cord for use in the tire 10 of the present invention may be unsubstituted or may have a substituent. Examples of the substituent can include alkyl group having 1 to 4 carbon atoms, such as a methyl group, an ethyl group, a n-propyl group, an isopropyl group, a n-butyl group, an isobutyl group, and a tert-butyl group, but are not limited thereto. In particular, 1,4-cyclohexanedicarboxylic acid is preferable from the viewpoints of, for example, heat resistance, dimension stability, and strength of the reinforcement cord. Such alicyclic dicarboxylic acids may be used singly or in combination of two or more kinds thereof.

There are here geometric isomers of a trans isomer and a cis isomer with respect to a cyclic dicarboxylic acid. For example, 1,4-cyclohexanedicarboxylic acid as a raw material monomer may be used as any one of the trans isomer and the cis isomer or may be used as a mixture of the trans isomer and the cis isomer at any of various ratios.

Examples of the linear or branched aliphatic dicarboxylic acid having 3 to 20 carbon atoms can include malonic acid, dimethylmalonic acid, succinic acid, 2,2-dimethylsuccinic acid, 2,3-dimethylglutaric acid, 2,2-diethylsuccinic acid, 2,3-diethylglutaric acid, glutaric acid, 2,2-dimethylglutaric acid, adipic acid, 2-methyladipic acid, trimethyladipic acid, pimelic acid, suberic acid, azelaic acid, sebacic acid, dodecanedioic acid, tetradecanedioic acid, hexadecanedioic acid, octadecanedioic acid, eicosanoic diacid, and diglycolic acid, but are not limited thereto.

In general, as the number of aromatic rings contained in the dicarboxylic acid constituting the polyamide multifilament is larger, the binding force due to interaction of aromatic rings between molecules is higher and the Tg is raised. Accordingly, the number of aromatic rings contained in the dicarboxylic acid may be adjusted depending on durability and steering stability demanded in high-speed driving. For example, one where the ratio of the dicarboxylic acid having one aromatic ring to the aromatic dicarboxylic acid is 20% by mol or more, one where the ratio of the dicarboxylic acid having two aromatic rings to the aromatic dicarboxylic acid is 20% by mol or more, or one where the ratio of the dicarboxylic acid having three aromatic rings to the aromatic dicarboxylic acid is 20% by mol or more can be appropriately used. An increased number of aromatic rings contained in the dicarboxylic acid leads to an increase in melting point (Tm) at the same time and thus deterioration in fiber spinning processability, but the Tm can be decreased due to an increase in the number of carbon atoms of a diamine component.

<Diamine>

The ratio of the diamine having 7 to 12 carbon atoms to the diamine in the polyamide multifilament for use in the reinforcement cord in the tire 10 of the present invention is preferably 20% by mol or more, more preferably 30% by mol or more and 80% by mol or less, further preferably 40% by mol or more and 75% by mol or less, particularly preferably 45% by mol or more and 70% by mol or less from the viewpoints of spinning stability, heat resistance, and low water absorbability.

In general, a polymer high in Tg tends to be high also in Tm. In the case of a too high Tm, the polyamide is pyrolyzed in melting, resulting in deterioration in spinnability due to the occurrence of reductions in molecular weight and strength, coloration, and incorporation of decomposed gas. However, 20% by mol or more of the diamine having 7 to 12 carbon atoms is contained, thereby not only enabling a high Tg to be kept, but also enabling the Tm to be suppressed to one suitable for melt spinning. Since the polyamide containing the diamine having 7 to 12 carbon atoms is high in heat stability in melting, a multifilament excellent in spinning stability and good in uniformity can be obtained. Moreover, the amide group concentration in such a polyamide is reduced, and thus a multifilament excellent in dimension stability in water absorption can be obtained. In particular, 1,10-decamethylenediamine is preferable also from the viewpoint that it is a biomass-derived raw material.

A diamine other than 1,10-decamethylenediamine is not particularly limited, and may be an unsubstituted linear aliphatic diamine, a branched aliphatic diamine having a substituent such as an alkyl group having 1 to 4 carbon atoms, or an alicyclic diamine. Examples of the substituent include a methyl group, an ethyl group, a n-propyl group, an isopropyl group, a n-butyl group, an isobutyl group, and a tert-butyl group. Examples of such a diamine other than 1,10-decamethylenediamine can include linear aliphatic diamines such as ethylenediamine, propylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, and tridecamethylenediamine, 2-methylpentamethylenediamine, 2,2,4-trimethylhexamethylenediamine, 2-methyloctamethylenediamine, 2,4-dimethyloctamethylenediamine, 1,4-cyclohexanediamine, 1,3-cyclohexanediamine, and 1,3-cyclopentanediamine.

An aromatic diamine may also be added to the diamine in the reinforcement cord in the tire 10 of the present invention as long as the fluidity of the polyamide is not impaired. The aromatic diamine is a diamine containing an aromatic, and examples thereof include m-xylylenediamine, o-xylylenediamine, and p-xylylenediamine, but are not limited thereto.

The diamine other than 1,10-decamethylenediamine is more preferably one including a diamine having 5 to 6 carbon atoms, in which the ratio of the diamine having 5 to 6 carbon atoms is 20% by mol or more. The diamine having 5 to 6 carbon atoms is copolymerized besides 1,10-decamethylenediamine, and thus a polymer can be obtained which not only keeps a proper melting point suited for spinning, but also is high in crystallinity. Examples of the diamine having 5 to 6 carbon atoms can include pentamethylenediamine, hexamethylenediamine, 2-methylpentamethylenediamine, 2,5-dimethylhexanediamine, and 2,2,4-trimethylhexamethylenediamine.

2-Methylpentamethylenediamine is preferable as the diamine having 5 to 6 carbon atoms from the viewpoints of spinnability, fluidity, and strength. If the ratio of 2-methylpentamethylenediamine is too high, 2-methylpentamethylenediamine is self-cyclized and decomposed when molten, causing a reduction in molecular weight and thus deteriorations in spinnability and strength. The ratio of 2-methylpentamethylenediamine in the diamine is preferably 20% by mol or more and 70% by mol or less, more preferably 20% by mol or more and 60% by mol or less, further preferably 20% by mol or more and 55% by mol or less, because the ratio is required to be set in a range which causes no decomposition in melting with the fluidity being secured.

Alternatively, hexamethylenediamine is preferable as the diamine having 5 to 6 carbon atoms from the viewpoint of heat resistance of the reinforcement cord in the tire 10 of the present invention. If the ratio of hexamethylenediamine is too high, the melting point is so high that spinning is difficult, and thus the ratio of hexamethylenediamine in the diamine is preferably 20% by mol or more and 60% by mol or less, more preferably 20% by mol or more and 50% by mol or less, further preferably 20% by mol or more 45% by mol or less.

The amount of the dicarboxylic acid added and the amount of the diamine added are preferably approximately the same in terms of molar amount, for the purpose of an increase in molecular weight. The molar amount of the entire diamine relative to a molar amount of 1.00 of the entire dicarboxylic acid is preferably 0.90 to 1.20, more preferably 0.95 to 1.10, further preferably 0.98 to 1.05 on a molar ratio in consideration of the content of diffusion of the diamine outside the reaction system during a polymerization reaction.

A known terminal blocking agent can be further added for molecular weight regulation in production of the polyamide by polymerization from the dicarboxylic acid and the diamine. Examples of the terminal blocking agent include monocarboxylic acid, monoamine, acid anhydride such as phthalic anhydride, monoisocyanate, monoacid halide, monoester, and monoalcohol, and monocarboxylic acid and monoamine are preferable from the viewpoint of heat stability. Such terminal blocking agents may be used singly or in combination of two or more kinds thereof.

The cross ratio in the polyamide multifilament of the reinforcement cord in the tire 10 of the present invention, in particular, the semi-aromatic polyamide multifilament is preferably 1.7 or less. The cross ratio is a value obtained by dividing the maximum diameter by the minimum diameter in the multifilament, and serves as an index of uniformity among single yarns. The strength of the multifilament is affected by low physical properties in a strength distribution of single yarns, and thus a large variation among single yarns does not allow any strength to be exhibited. The cross ratio in the polyamide multifilament of the reinforcement cord in the tire 10 of the present invention, in particular, the semi-aromatic polyamide multifilament is preferably 1.7 or less, more preferably 1.6 or less, further preferably 1.5 or less. The cross ratio is 1.7 or less, thereby allowing stretching at a single yarn level to be uniformly performed, allowing the variation in single yarn strength to be small, and allowing the polyamide multifilament to exhibit excellent strength. The lower limit of the cross ratio is 1.0.

<Method of producing polyamide>

Examples of the method of producing the polyamide can include (1) a method (hot-melt polymerization method) involving heating an aqueous solution or aqueous suspension of a dicarboxylic acid/diamine salt or a mixture thereof, to perform polymerization with a molten state being kept, (2) a method (hot-melt polymerization/solid phase polymerization method) involving raising the degree of polymerization with the polyamide obtained by the hot-melt polymerization method being kept in a solid state at a temperature equal to or less than the melting point, (3) a method (prepolymer/extrusion polymerization method) involving heating an aqueous solution or aqueous suspension of a diamine/dicarboxylic acid salt or a mixture thereof, and furthermore again melting a prepolymer precipitated, by an extruder such as a kneader, to thereby raise the degree of polymerization, (4) a method (prepolymer/solid phase polymerization method) involving heating an aqueous solution or aqueous suspension of a diamine/dicarboxylic acid salt or a mixture thereof, and raising the degree of polymerization of a prepolymer precipitated, with a solid state being kept at a temperature equal to or less than the melting point of the polyamide, (5) a method (solid phase polymerization method) involving polymerizing a diamine/dicarboxylic acid salt or a mixture thereof with a solid state being kept, and (6) a method (solution method) involving performing polymerization by use of a dicarboxylic acid halide component equivalent to a dicarboxylic acid, and a diamine component.

The polyamide is preferably produced according to (1) the hot-melt polymerization method or (2) the hot-melt polymerization/solid phase polymerization method as the method of producing the polyamide because the ratio of a trans isomer is easily kept at 85% or less and the resulting polyamide is excellent in color tone. The polymerization form may be a batch or continuous form. The polymerization apparatus is not particularly limited, and examples thereof include a known apparatus, for example, extruder-type reactors such as an autoclave-type reactor, a tumbler-type reactor, and a kneader.

<Polyamide multifilament>

The polyamide multifilament of the reinforcement cord in the tire 10 of the present invention, in particular, the semi-aromatic polyamide multifilament is obtained by fiberizing the above polyamide. Various methods can be used as the method of producing the polyamide multifilament, and melt spinning is usually used and a screw-type melt extruder is preferably used. The spinning temperature (melting temperature) of the polyamide is preferably 300°C or more and 360°C or less. In a case where the temperature is 300°C or more, incorporation of a non-dissolved product due to lack in the amount of heat can be suppressed. In a case where the temperature is 360°C or less, polymer pyrolysis and the occurrence of decomposed gas can be significantly reduced, and spinnability is enhanced.

An adhesive is preferably used for adhesion of the rubber constituting the tire and the polyamide cord, in the polyamide multifilament cord for use in the reinforcement cord in the tire 10 of the present invention, and this adhesive is preferably a resorcin-formalin-latex liquid (RFL liquid).

After the RFL liquid is attached, drying, fixing and relaxing treatments of the RFL liquid are performed. The drying temperature of the RFL liquid is preferably 120 to 250°C, more preferably 140 to 200°C, and the drying time thereof is preferably 10 seconds or more, more preferably 20 to 120 seconds. The twisted product after drying is subsequently subjected to heat treatment in a heat set zone and a normalizing zone. The temperature and the time in the heat set zone and the normalizing zone are preferably 150 to 250°C and 10 to 300 seconds, respectively. For the heat treatment, 2% to 10% of stretching, preferably, 3% to 9% of stretching is applied.

Next, suitable modes of the belt structure of the tire 10 of the present invention will be described.

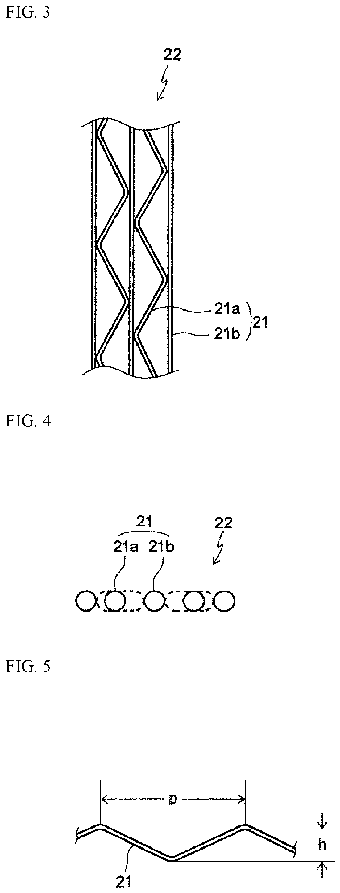

FIG. 2 is a partial cross-sectional view in the width direction of a belt layer of a tire according to one suitable embodiment of the present invention, FIG. 3 is a schematic plan view of a metal cord of a belt layer of a tire according to one suitable embodiment of the present invention, and FIG. 4 is a schematic cross-sectional view in the width direction of a metal cord of a belt layer of a tire according to one suitable embodiment of the present invention. A belt layer of a tire 10 according to one suitable embodiment of the present invention is obtained by coating 2 to 10 metal filaments 21 with an elastomer 23. The metal filaments 21 constitute a metal cord 22 by a bundle of suitably 2 filaments or more, more suitably 5 filaments or more, and suitably 20 filaments or less, more suitably 12 filaments or less, further suitably 10 filaments or less, particularly suitably 9 filaments or less. Five metal filaments 21 are not twisted but arranged in parallel, and form the metal cord 22, in the illustrated example.

In such a metal cord 22 of a belt layer of a tire according to one suitable embodiment of the present invention, at least one pair of adjacent metal filaments 21 different in at least one of the amount of shaping and the shaping pitch in a direction perpendicular to the extending direction of the metal filaments 21 is present in the metal cord 22. Preferably, 50% or more of such a pair of adjacent metal filaments 21 are different in at least one of the amount of shaping and the shaping pitch in a direction perpendicular to the extending direction of the metal filaments 21. While metal filaments 21a shaped and filaments 21b not shaped (the amount of shaping is 0 mm and the shaping pitch is $\infty$ mm) are alternately placed in the illustrated example, metal filaments different in amount of shaping may be alternately placed or metal filaments different in shaping pitch may be alternately placed. Suitably, the metal filaments constituting the bundle are preferably placed in the form of straight metal filaments not shaped on both side portions. Thus, such metal filaments 21 different in amount of shaping or shaping pitch are adjacent and thus are avoided from being matched in phase therebetween in the belt layer of a tire 10 according to one suitable embodiment of the present invention. Such a configuration enables the elastomer to sufficiently penetrate between such adjacent metal filaments 21, and as a result, enables a steel cord to be out-of-plane deformed in inputting under compression and enables steel cord bending to be suppressed. Herein, FIG. 5 is an illustrative view of each metal filament, which represents the definitions of the amount h of shaping and the shaping pitch p with respect to each metal filament in a tire 10 according to one suitable embodiment of the present invention, and the amount h of shaping refers to the range of variation except for the diameters of the metal filaments 21.

As described above, a bundle of metal filaments has a difficulty in penetration of the elastomer between adjacent filaments, causing an elastomer-non-coating region not coated with the elastomer to occur. Accordingly, in a case where a metal cord with metal filaments not twisted but bundled is used as a cord for a belt, such metal filaments are mutually displaced in this elastomer-non-coating region during tire rolling, and as a result, the belt is reduced in in-place rigidity and is impaired in steering stability in some cases. However, the belt layer of a tire 10 according to one suitable embodiment of the present invention, in which the elastomer 23 sufficiently penetrates between adjacent metal filaments 21, thus can eliminate the above failure, can be enhanced in in-plane rigidity of the belt and can be improved in steering stability. In order to favorably obtain such an effect, the elastomer coverage in the side surface in the width direction of the metal cord 22, of adjacent metal filaments 21, is preferably 10% or more per unit length, more preferably 20% or more. The coverage is more preferably 50% or more, further preferably 80% or more, most preferably 90% or more.

The elastomer coverage in the present invention, for example, in the case of use of rubber as the elastomer and use of a steel cord as the metal cord, here refers to one obtained by coating the steel cord with the rubber, vulcanizing the resultant, thereafter drawing the steel cord from the resulting rubber-steel cord composite, measuring the lengths of side surfaces in the width direction of a metal cord of steel filaments, coated with the rubber penetrating into gaps between such steel filaments constituting the steel cord, and calculating the values based on the following calculating expression to determine the average:

$$\text{Elastomer coverage} = (\text{Rubber coating length}/\text{Sample length}) \times 100(\%).$$

Such calculation can be made in the same manner also in a case where any elastomer other than the rubber is used as the elastomer and in a case where any metal cord other than the steel cord is used as the metal cord.

A too large amount of shaping of the metal filaments 21 in the belt layer of a tire 10 according to one suitable embodiment of the present invention decreases the distance w of the metal cord 22 in the belt layer and causes a reduction in strength of the belt. Thus, the amount of shaping of the metal filaments 21 is preferably about 0.03 to 0.30 mm. The amount of shaping is 0.30 mm or less, thereby enabling strength of the belt layer to be ensured and allowing the effects of the present invention to be sufficiently obtained. In particular, the amount of shaping is suitably 0.03 to 0.30 mm, more preferably 0.03 to 0.25 mm, most preferably 0.03 to 0.20 mm in application of shaping to the metal filaments 21, from the viewpoints of the distance w of the metal cord 22 and strength of the metal filaments 21. The shaping pitch of the metal filaments 21 is preferably 2 to 30 mm, more preferably 2 to 20 mm, most preferably 3 to 15 mm.

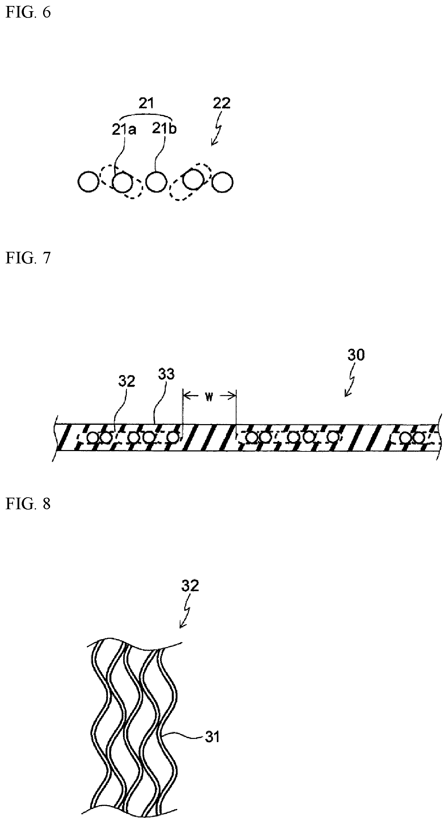

While the metal filaments 21a shaped is shaped in the width direction of the metal cord 22, with respect to the metal cord 22 illustrated in FIGS. 3 and 4, the shaping direction of the metal filaments 21 may also be inclined relative to the width direction of the metal cord 22 in the belt layer of a tire according to one suitable embodiment of the present invention. FIG. 6 is another exemplary schematic cross-sectional view in the width direction of a metal cord of a belt layer of a tire according to one suitable embodiment of the present invention. Such a structure also enables rubber to sufficiently penetrate between adjacent metal filaments 21, and the effects of the present invention can be obtained. However, the shaping direction of the adjacent metal filaments 21 preferably corresponds to the width direction of a metal cord 22 from the viewpoint of lightweight properties, in a belt layer of a tire 10 according to one suitable embodiment of the present invention, because the belt layer can be thinner.

In the belt layer of a tire 10 according to one suitable embodiment of the present invention, at least one of the metal filaments 21 in the metal cord 22 is preferably substantially a straight metal filament. In a case where straight metal filaments 21b not shaped and metal filaments 21a shaped are adjacent as illustrated in FIGS. 3 and 4, the amount of the elastomer entering both the metal filaments 21 is increased, and thus the elastomer coverage in the side surface in the width direction of the metal cord 22, of the adjacent metal filaments 21, is higher and the effects of the present invention can be favorably obtained. Moreover, such metal filaments 21 placed at both ends of the metal cord 22 can be straight metal filaments to thereby allow the distance w between adjacent metal cords 22 in the elastomer to be increased, resulting in an enhancement in durability. More preferably, straight metal filaments 21b not shaped and metal filaments 21a shaped are alternately placed as illustrated in FIG. 3.

The surface state of the metal filaments 21 in the belt layer of a tire 10 according to one suitable embodiment of the present invention is not particularly limited, and can take, for example, the following form. That is, any metal filament 21 is exemplified where there are 2% by atom or more and 60% by atom or less of N atoms on the surface and the ratio of Cu/Zn on the surface is 1 or more and 4 or less. In addition, any metal filament 21 is exemplified where the amount of phosphorus contained in the form of oxide in the outermost layer of the metal filament, located within 5 nm inward in the filament radial direction from the metal filament surface, is 7.0% by atom or less in terms of the proportion of the entire amount excluding the amount of C.

The surface of the metal filaments 21 may be plated in the belt layer of a tire 10 according to one suitable embodiment of the present invention. The type of such plating is not particularly limited, and examples include not only zinc (Zn) plating, copper (Cu) plating, tin (Sn) plating, brass (copper-zinc (Cu-Zn)) plating, and bronze (copper-tin (Cu-Sn)) plating, but also ternary plating such as copper-zinc-tin (Cu-Zn-Sn) plating and copper-zinc-cobalt (Cu-Zn-Co) plating. In particular, brass plating and copper-zinc-cobalt plating are preferable. The reason is because any metal filament which is brass-plated is excellent in adhesiveness to rubber. The ratio of copper and zinc (copper: zinc) in brass plating is usually 60 to 70:30 to 40 on a mass basis, and the proportion of copper and the proportion of cobalt in copper-zinc-cobalt plating are usually 60 to 75% by weight and 0.5 to 10% by weight, respectively. The thickness of such a plating layer is generally 100 nm or more and 300 nm or less.

Moreover, the diameter, tensile strength, and cross-sectional shape of the metal filaments 21 are not particularly limited in the belt layer of a tire 10 according to one suitable embodiment of the present invention. For example, the diameter of the metal filaments 21 can be 0.15 mm to 0.40 mm. The metal filaments 21 which can be used are those where the tensile strength is 2500 MPa or more. Moreover, the cross-sectional shape in the width direction of the metal filaments 21 is also not particularly limited, may be, for example, elliptical, rectangular, triangular, or polygonal, and is preferably circular. In a case where the metal filaments 21 constituting the metal cord 22 are bundled in the belt layer of a tire 10 according to one suitable embodiment of the present invention, lapping filaments may also be used.

Furthermore, the elastomer 23 coating the metal cord 22 is also not particularly limited in the belt layer of a tire 10 according to one suitable embodiment of the present invention, and any rubber or the like conventionally used for coating a metal cord can be used. Any other elastomers than them, for example, diene-based rubber and hydrogenated products thereof, such as natural rubber (NR), isoprene rubber (IR), epoxidized natural rubber, styrenebutadiene rubber (SBR), butadiene rubber (BR, high cis BR and low cis BR), nitrile rubber (NBR), hydrogenated NBR, and hydrogenated SBR, olefin-based rubber such as ethylene-propylene rubber (EPDM, EPM), maleic acid-modified ethylene-propylene rubber (M-EPM), butyl rubber (IIR), a copolymer of isobutylene and an aromatic vinyl or diene-based monomer, acrylic rubber (ACM), and an ionomer, halogen-containing rubber such as Br-IIR, Cl-IIR, a brominated product (Br-IPMS) of an isobutylene/p-methylstyrene copolymer, chloroprene rubber (CR), hydrin rubber (CHR), chlorosulfonated polyethylene rubber (CSM), chlorinated polyethylene rubber (CM), and maleic acid-modified chlorinated polyethylene rubber (M-CM), silicone rubber such as methyl vinyl silicone rubber, dimethyl silicone rubber, and methyl phenyl vinyl silicone rubber, sulfur-containing rubber such as polysulfide rubber, fluororubber such as vinylidene fluoride-based rubber, fluorine-containing vinyl ether-based rubber, tetrafluoroethylene-propylene-based rubber, fluorine-containing silicon-based rubber, and fluorine-containing phosphazene-based rubber, and thermoplastic elastomers such as a styrene-based elastomer, an olefin-based elastomer, an ester-based elastomer, a urethane-based elastomer, and a polyamide-based elastomer can be each preferably used. These elastomers may be used singly or as a mixture of two or more kinds thereof. Such an elastomer can be appropriately compounded with not only sulfur, a vulcanization promoter, and carbon black, but also an anti-aging agent, zinc oxide, stearic acid, and/or the like commonly used in a rubber product such as a tire and a conveyor belt.

The belt layer of a tire 10 according to one suitable embodiment of the present invention can be produced according to a known method. For example, it can be produced by arranging the metal cord of the belt layer of a tire 10 according to one suitable embodiment of the present invention, in parallel at a predetermined interval, and coating the metal cord with a sheet including an elastomer and having a thickness of about 0.5 mm, from both upper and lower ends. Shaping of the metal filaments can also be performed by using a general shaping machine according to a conventional procedure.

Next, other suitable modes of the belt structure of the tire 10 of the present invention will be described.

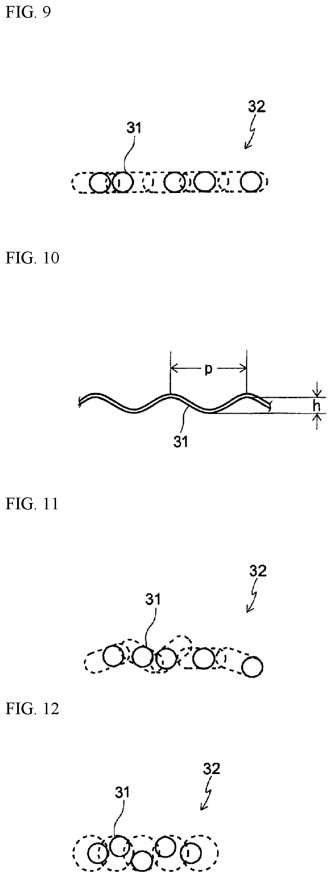

FIG. 7 is a partial cross-sectional view in the width direction of a belt layer of a tire according to another suitable embodiment of the present invention, FIG. 8 is a schematic plan view of a metal cord of a belt layer of a tire according to another suitable embodiment of the present invention, and FIG. 9 is a schematic cross-sectional view in the width direction of a metal cord of a belt layer of a tire according to another suitable embodiment of the present invention. The belt layer of a tire according to another suitable embodiment of the present invention is obtained by coating a metal cord 32 including a bundle of 2 to 10 metal filaments 31 not twisted but arranged in parallel in one row, with an elastomer 33. Five metal filaments 31 are not twisted but arranged in parallel, and form the metal cord 32, in the illustrated example.

In such a metal cord 32 of a belt layer of a tire 10 according to another suitable embodiment of the present invention, all the metal filaments 31 are shaped at the same amount of shaping and the same pitch, and at least one pair of metal filaments placed so as to be different in phase from adjacent metal filaments is present in the metal cord 32. Thus, the metal filaments 31 shaped at the same amount of shaping and the same pitch are different in phase, and thus are avoided from being matched in phase therebetween, in the belt layer of a tire 10 according to another suitable embodiment of the present invention. Such a configuration enables the elastomer to sufficiently penetrate between adjacent metal filaments 31, and as a result, enables a steel cord to be in-plane deformed in inputting under compression and enables deterioration in fatigue properties of such a steel cord to be prevented. Herein, FIG. 10 is an illustrative view of each metal filament, which represents the definitions of the amount h of shaping and the shaping pitch p with respect to each metal filament in a tire according to another suitable embodiment of the present invention, and the amount h of shaping refers to the range of variation except for the diameters of the metal filaments 31.

In addition, a bundle of metal filaments has a difficulty in penetration of the elastomer between adjacent filaments, causing an elastomer-non-coating region not coated with the elastomer to occur. Accordingly, in a case where a metal cord with metal filaments not twisted but bundled is used as a cord for a belt, such metal filaments are mutually displaced in this elastomer-non-coating region during tire rolling, and as a result, the belt is reduced in in-place rigidity and is impaired in steering stability in some cases. However, the belt layer of a tire according to another suitable embodiment of the present invention, in which the elastomer 33 sufficiently penetrates between adjacent metal filaments 31, thus can eliminate the above failure, can be enhanced in in-plane rigidity of the belt and can be improved in steering stability. In order to favorably obtain such an effect, the elastomer coverage in the side surface in the width direction of the metal cord 32, of adjacent metal filaments 31, is preferably 10% or more per unit length, more preferably 20% or more per unit length. The coverage is more preferably 50% or more, further preferably 80% or more, most preferably 90% or more.

There is a difference in phase between adjacent metal filaments at at least one location of the metal cord 32,

in the belt layer of a tire according to another suitable embodiment of the present invention, and the phase difference is preferably $\pi/4$ to $7\pi/4$. The phase difference is in such a range, and thus the effects of the present invention can be favorably obtained. The phase difference is more preferably $\pi/2$ to $3\pi/2$, and a case where the phase difference is $\pi$ is particularly preferable.

A too large amount of shaping of the metal filaments 31 in the belt layer tire 10 according to another suitable embodiment of the present invention decreases the distance w of the metal cord 32 in the belt layer and causes a reduction in strength of the belt. Thus, the amount of shaping of the metal filaments 31 is preferably about 0.03 to 0.30 mm. The amount of shaping is 0.30 mm or less, thereby enabling strength of the belt layer to be ensured and allowing the effects of the present invention to be sufficiently obtained. In particular, the amount of shaping is suitably 0.03 to 0.30 mm, more preferably, 0.03 to 0.25 mm, most preferably 0.03 to 0.20 mm in application of shaping to the metal filaments 31, from the viewpoints of the distance w of the metal cord 32 and strength of the metal filaments 31. The shaping pitch of the metal filaments 31 is preferably 2 to 30 mm, more preferably, 2 to 20 mm, most preferably 3 to 15 mm.

While the metal filaments 31 shaped is shaped in the width direction of the metal cord 32, with respect to the metal cord 2 illustrated in FIGS. 8 and 9, the shaping direction of the metal filaments 31 may also be inclined relative to the width direction of the metal cord 32 in the belt layer of a tire 10 according to another suitable embodiment of the present invention. FIG. 11 is another exemplary schematic cross-sectional view in the width direction of a metal cord of a belt layer of a tire according to another suitable embodiment of the present invention. Such a structure also enables rubber to sufficiently penetrate between adjacent metal filaments 31, and the effects of the present invention can be obtained. However, the shaping direction of the adjacent metal filaments 31 preferably corresponds to the width direction of a metal cord 32 from the viewpoint of lightweight properties, also in a belt layer of a tire 10 according to another suitable embodiment of the present invention, because the belt layer can be thinner.

In the belt layer of a tire 10 according to another suitable embodiment of the present invention, shaping is not limited to only two-dimensional shaping and may be three-dimensional shaping. FIG. 12 is still another exemplary schematic cross-sectional view in the width direction of a metal cord of a belt layer of a tire according to another suitable embodiment of the present invention. In the illustrated example, spiral shaping is applied to metal filaments 31, and five metal filaments 31 to which spiral shaping is applied are not twisted but arranged in parallel in one row, and form a metal cord 32. In a case where three-dimensional shaping is applied to the metal filaments 31, the amount of shaping of the metal filaments 31 is preferably 0.10 mm or more and 0.50 mm or less, more preferably 0.20 mm or more and 0.30 mm or less. The amount of shaping is 0.50 mm or less, thereby allowing a reduction in strength of belt layers 13a and 13b to be suppressed and enabling the effects of the present invention to be sufficiently obtained. In the case of three-dimensional shaping, the shaping pitch of the metal filaments 31 is preferably 5 mm or more, more preferably 8 mm or more and 20 mm or less.

The metal filaments 31 generally mean linear metal filaments containing iron, namely, steel as a main component (the mass of iron relative to the total mass of the metal filaments is more than 50% by mass), and may include only iron or may include any metal other than iron, for example, zinc, copper, aluminum, and/or tin, also in the belt layer of a tire 10 according to another suitable embodiment of the present invention.

The surface of the metal filaments 31 may be plated also in the belt layer of a tire 10 according to another suitable embodiment of the present invention. The type of such plating is not particularly limited, and examples include zinc plating, copper plating, brass plating, and bronze plating. In particular, brass plating is preferable. The reason is because any metal filament which is brass-plated is excellent in adhesiveness to rubber. The ratio of copper and zinc (copper: zinc) in brass plating is usually 60 to 70:30 to 40 on a mass basis. The thickness of such a plating layer is generally 100 nm to 300 nm.

Moreover, the diameter, tensile strength, and cross-sectional shape of the metal filaments 31 are not particularly limited also in the belt layer of a tire 10 according to another suitable embodiment of the present invention. For example, the diameter of the metal filaments 31 can be 0.15 mm to 0.40 mm. The metal filaments 31 which can be used are those where the tensile strength is 2500 MPa or more. Moreover, the cross-sectional shape in the width direction of the metal filaments 31 is also not particularly limited, may be, for example, elliptical, rectangular, triangular, or polygonal, and is preferably circular. In a case where the metal filaments 31 constituting the metal cord 32 are bundled also in the belt layer of a tire 10 according to another suitable embodiment of the present invention, lapping filaments may also be used.

In addition, the elastomer 33 coating the metal cord 32 is also not particularly limited also in the belt layer of a tire 10 according to another suitable embodiment of the present invention, and any rubber or the like conventionally used for coating a metal cord can be used. Any other elastomers than them, for example, diene-based rubber and hydrogenated products thereof, such as natural rubber (NR), isoprene rubber (IR), epoxidized natural rubber, styrenebutadiene rubber (SBR), butadiene rubber (BR, high cis BR and low cis BR), nitrile rubber (NBR), hydrogenated NBR, and hydrogenated SBR, olefin-based rubber such as ethylene-propylene rubber (EPDM, EPM), maleic acid-modified ethylene-propylene rubber (M-EPM), butyl rubber (IIR), a copolymer of isobutylene and an aromatic vinyl or diene-based monomer, acrylic rubber (ACM), and an ionomer, halogen-containing rubber such as Br-IIR, CI-IIR, a brominated product (Br-IPMS) of an isobutylene/p-methylstyrene copolymer, chloroprene rubber (CR), hydrin rubber (CHR), chlorosulfonated polyethylene rubber (CSM), chlorinated polyethylene rubber (CM), and maleic acid-modified chlorinated polyethylene rubber (M-CM), silicone rubber such as methyl vinyl silicone rubber, dimethyl silicone rubber, and methyl phenyl vinyl silicone rubber, sulfur-containing rubber such as polysulfide rubber, fluororubber such as vinylidene fluoride-based rubber, fluorine-containing vinyl ether-based rubber, tetrafluoroethylene-propylene-based rubber, fluorine-containing silicon-based rubber, and fluorine-containing phosphazene-based rubber, and thermoplastic elastomers such as a styrene-based elastomer, an olefin-based elastomer, an ester-based elastomer, a urethane-based elastomer, and a polyamide-based elastomer can be each preferably used. These elastomers may be used singly or as a mixture of two or more kinds thereof. Such an elastomer can be appropriately compounded with not only sulfur, a vulcanization promoter, and carbon black, but also an anti-aging agent, zinc oxide, stearic acid, and/or the like commonly used in a rubber product such as a tire and a conveyor belt.

The belt layer of a tire 10 according to another suitable embodiment of the present invention can also be produced according to a known method. For example, it can be produced by arranging the metal cord of the belt layer of a tire 10 according to one suitable embodiment of the present invention, in parallel at a predetermined interval, and coating the metal cord with a sheet including an elastomer and having a thickness of about 0.5 mm, from both upper and lower ends. Shaping of the metal filaments can also be performed by using a general shaping machine according to a conventional procedure.

It is important for the tire 10 of the present invention to only use a cord including a predetermined polyamide multifilament as a reinforcement cord, in at least one of the carcass ply 12 and the belt reinforcement layer 14, and other configuration is not particularly limited and any known structure can be adopted. While the carcass includes one carcass ply 12 in the example illustrated in FIG. 1, the number of layers in the carcass ply in the tire 10 of the present invention is not limited thereto and may be two or more. A locking structure of the carcass ply 12 in a bead portion is also not limited to a structure where locking is made by winding up around the bead core 11, as illustrated, and a structure (not illustrated) may be adopted where an end portion of the carcass ply is sandwiched by a two-layered bead core.

Moreover, while the belt 13 include two layers, the belt layers 13a and 13b, in the tire 10 illustrated, three or more belt layers may be present in the tire 10 of the present invention. The belt layer can be a rubberized layer of a cord which extends with being sloped at an angle of, for example, $\pm15$ to 40° relative to the tire circumference direction, preferably a rubberized layer of a steel cord. For example, the two layers, the belt layers 13a and 13b, illustrated, may be crossing layers which are stacked so as to be mutually crossed with a tire equator plane being sandwiched between respective cords constituting the belt layers.

Furthermore, an inner liner may be placed in the innermost layer not illustrated, in the tire 10 of the present invention. In the tire 10 of the present invention, usual air or air where the oxygen partial pressure is changed, or an inert gas such as nitrogen can be used as the gas with which the tire is filled. The tire of the present invention is suitable for a passenger car tire.

EXAMPLES

Hereinafter, the tire of the present invention will be described in more detail with reference to Examples.

<Examples and Comparative Examples>

Each tire of Comparative Example 1 and Example 3 and a tire of Example 4, corresponding to the type illustrated in FIG. 1, were produced at a tire size of 205/55R16 and at a tire size of 155/65R14, respectively. The type of cord, the cord structure, and physical properties with respect to a cord used as each reinforcement cord of the carcass ply and the belt reinforcement layer are as shown in Tables 1 and 2. The resulting tires were each evaluated according to the following procedures with respect to high-speed durability, high-speed steering stability, and rolling resistance. The Tg, the value of tan $\delta$ (25°C)/tan $\delta$ (100°C), and the value of E' (100°C)/E' (25°C) with respect to each cord including a polyamide multifilament were adjusted by changing the ratio of the aromatic dicarboxylic acid to the dicarboxylic acid, the number of twists, immersion conditions during immersion in an adhesive, and heat treatment conditions after treatment with the adhesive. The number of yarns in the carcass ply and the belt reinforcement layer was 50 yarns/50 mm, and the carcass ply was placed substantially in a direction perpendicular to the tire circumference direction and the belt reinforcement layer was placed substantially in the tire circumference direction.

The belt structures correspond to a metal cord (A) corresponding to the type illustrated in FIG. 3 and a metal cord (B) corresponding to the type illustrated in FIG. 8, and the diameter of the metal filaments is 0.25 mm. The amount of shaping is 0.15 mm and the shaping pitch is 4 mm with respect to the metal cord (A), and the amount of shaping is 0.15 mm and the shaping pitch is 4 mm with respect to the metal cord (B). PA9T in the Tables represents a cord using a polyamide multifilament, and includes a polyamide mainly including terephthalic acid and 1,9-diaminenonane. The ratio of the aromatic dicarboxylic acid is as shown in the Tables.

<High-speed durability>

The high-speed durability was evaluated by incorporating each of the tires of Comparative Example 1 and Example 3, into a normal rim prescribed in JATMA, applying an adequate internal pressure thereto, applying an adequate load thereto, travelling such each tire by a drum tester with the speed being increased stepwise by 10 km/h from a starting speed of 120 km/h every 20 minutes, and measuring the speed at the occurrence of any failure. Thereafter, the results with respect to each tire other than the tires of Comparative Example 1 and Example 3 were estimated based on the results in Comparative Example 1 and Example 3. The results were each represented with an index under the assumption that those in Comparative Example 1 were each 100. A smaller index corresponded to a more favorable result. The results obtained are described together in Tables 1 and 2.

<High-speed steering stability>

The high-speed steering stability was evaluated by incorporating each of the tires of Comparative Example 1 and Example 3, into a normal rim prescribed in JATMA, applying an adequate internal pressure thereto, fitting four of such tires to a passenger car having a displacement of 2000 cc, and allowing two drivers to board and drive the car on a test course of an asphalt road surface at a high speed, to perform sensory rating of characteristics such as steering wheel responsibility, rigid feeling, and gripping by the drivers. Thereafter, the results with respect to each tire other than the tires of Comparative Example 1 and Example 3 were estimated based on the results in Comparative Example 1 and Example 3. The results were each represented with an index under the assumption that those in Comparative Example 1 were each 100. A smaller index corresponded to a more favorable result. The results are described together in Tables 1 and 2.

<Rolling resistance>

The rolling resistance was evaluated by incorporating each of the tires of Comparative Example 1 and Examples 3 and 4, into a normal rim prescribed in JATMA, applying an adequate internal pressure thereto, applying an adequate load thereto, and measuring the resistance force of such each tire by a drum test at a speed of 80 km/h. Thereafter, the results with respect to each tire other than the tires of Comparative Example 1 and Examples 3 and 4 were estimated based on the results in Comparative Example 1 and Example 3. The results were each represented with an index under the assumption that those in Comparative Example 1 were each 100. A larger index value represented a lower rolling resistance, and thus was more excellent. The results obtained are described together in Tables 1 and 2.

[Table 1]

| | Comparative Example 1 | Comparative Example 2 | Example 1 | Example 2 |
|---|---|---|---|---|
| Applied section | Cap layer | Cap layer | Cap layer | Cap layer |
| Type of cord | Ny66[*2] | Aramid | PA9T | PA9T |
| Cord structure | 1400 dtex/2 | 1400 dtex/2 | 1400 dtex/2 | 1400 dtex/2 |
| Metal cord structure of belt | A | A | A | A |
| Ratio of aromatic dicarboxylic acid [*1](% by mol) | - | - | 50 | 60 |
| Tg (°C) | 50 | None | 85 | 100 |
| Tan δ (25°C) | 0.07 | 0.05 | 0.05 | 0.05 |
| Tan δ (100°C) | 0.09 | 0.05 | 0.07 | 0.06 |
| Tan δ (25°C)/Tan δ (100°C) | 0.78 | 1.0 | 0.71 | 0.83 |
| E' (100°C) (GPa) | 4.6 | 50 | 4.7 | 4.8 |
| E' (25°C) (GPa) | 7.1 | 51 | 6.4 | 6.0 |
| E' (100°C)/E' (25°C) | 0.65 | 0.98 | 0.73 | 0.80 |
| Moisture content (% by mass) | 2.5 | 0.1 | 1.8 | 1.5 |
| N1 | 26 | 26 | 26 | 26 |
| N2 | 26 | 26 | 26 | 26 |
| α1 | 0.32 | 0.29 | 0.32 | 0.32 |
| α2 | 0.46 | 0.41 | 0.46 | 0.46 |
| High-speed durability (index) | 100 | - | 91 | 92 |
| High-speed steering stability (index) | 100 | - | 100 | 100 |
| Rolling resistance (index) | 100 | - | 103 | 106 |

*1: Ratio of aromatic dicarboxylic acid to dicarboxylic acid

*2: Nylon 66

[Table 2]

| | Example 3 | Example 4 | Example 5 | Example 6 | Example 7 |
|---|---|---|---|---|---|
| Applied section | Cap layer | Cap layer | Cap layer | Cap layer | Cap layer |
| Type of cord | PA9T | PA9T | PA9T | PA9T | PA9T |
| Cord structure | 1400 dtex/2 | 1400 dtex/2 | 1400 dtex/2 | 1400 dtex/2 | 1400 dtex/2 |
| Metal cord structure of belt | A | B | A | A | A |
| Ratio of aromatic dicarboxylic acid [*1](% by mol) | 70 | 70 | 70 | 70 | 70 |
| Tg (°C) | 120 | 120 | 120 | 120 | 120 |
| Tan δ (25°C) | 0.05 | 0.05 | 0.05 | 0.05 | 0.05 |
| Tan δ (100°C) | 0.05 | 0.05 | 0.05 | 0.05 | 0.05 |
| Tan δ (25°C)/Tan δ (100°C) | 1.0 | 1.0 | 1.0 | 1.0 | 1.0 |

(continued)

| | Example 3 | Example 4 | Example 5 | Example 6 | Example 7 |
|---|---|---|---|---|---|
| E' (100°C) (GPa) | 4.9 | 4.9 | 2.6 | 3.6 | 5.7 |
| E' (25°C) (GPa) | 5.7 | 5.7 | 3.2 | 4.6 | 6.8 |
| E' (100°C)/E' (25°C) | 0.86 | 0.86 | 0.81 | 0.78 | 0.84 |
| Moisture content (% by mass) | 1.3 | 1.3 | 1.3 | 1.3 | 1.3 |
| N1 | 26 | 26 | 47 | 39 | 13 |
| N2 | 26 | 26 | 47 | 39 | 13 |
| $\alpha$1 | 0.32 | 0.32 | 0.58 | 0.48 | 0.16 |
| $\alpha$2 | 0.46 | 0.46 | 0.82 | 0.68 | 0.23 |
| High-speed durability (index) | 93 | 93 | 91 | 92 | 95 |
| High-speed steering stability (index) | 100 | 100 | 98 | 99 | 101 |
| Rolling resistance (index) | 109 | 111 | 107 | 108 | 110 |

It can be seen from Tables 1 and 2 that the tire of the present invention is enhanced in durability, steering stability and low rolling resistance in high-speed driving. The tire of Comparative Example 2, in which the reinforcement cord of the cap layer was a cord including an aramid fiber, was too high in rigidity and was considered to be difficult to produce, and thus was not evaluated.

DESCRIPTION OF SYMBOLS

10       passenger car tire (tire)
11       bead core
12       carcass ply
13       belt
13a,     13b belt layer
14       belt reinforcement layer
14a      cap layer
14b      layered layer
15       bead filler
21, 31    metal filament
22, 32    metal cord
23, 33    elastomer

**Claims**

1. A tire comprising a pair of bead cores, a carcass including at least one carcass ply extending between the pair of bead cores, a belt including at least one belt layer placed outward in a tire radial direction of the carcass, and at least one belt reinforcement layer placed outward in a tire radial direction of the belt, wherein
a reinforcement cord of at least one of the carcass ply and the belt reinforcement layer includes a cord using a polyamide multifilament including a polycondensate of a dicarboxylic acid including an aromatic dicarboxylic acid with a diamine.

2. The tire according to claim 1, wherein the diamine is at least one of an aliphatic diamine and an alicyclic diamine.

3. The tire according to claim 1 or 2, wherein the glass transition temperature of the reinforcement cord taken out from the tire is 80 to 230°C.

4. The tire according to any one of claims 1 to 3, wherein the ratio of the dynamic elastic modulus E' (100°C) at 100°C and the dynamic elastic modulus E' (25°C) at 25°C of the reinforcement cord taken out from the tire, E' (100°C)/E' (25°C), is 0.7 to 1.0.

5. The tire according to any one of claims 1 to 4, wherein the moisture content in the reinforcement cord taken out from the tire is 0.1 to 2.0% by mass.

6. The tire according to any one of claims 1 to 5, wherein the ratio of the loss tangent tan δ (25°C) at 25°C and the loss tangent tan δ (100°C) at 100°C of the reinforcement cord taken out from the tire, tan δ (25°C)/tan δ (100°C), is 0.7 to 1.0.

7. The tire according to any one of claims 1 to 6, wherein the loss tangent tan δ (25°C) at 25°C of the reinforcement cord taken out from the tire is 0.01 to 0.06.

8. The tire according to any one of claims 1 to 7, wherein the ratio of the aromatic dicarboxylic acid to the dicarboxylic acid in the reinforcement cord is 50% by mol or more.

9. The tire according to any one of claims 1 to 8, wherein the ratio of a dicarboxylic acid having one aromatic ring to the aromatic dicarboxylic acid is 20% by mol or more.

10. The tire according to any one of claims 1 to 8, wherein the ratio of a dicarboxylic acid having two aromatic rings to the aromatic dicarboxylic acid is 20% by mol or more.

11. The tire according to any one of claims 1 to 8, wherein the ratio of a dicarboxylic acid having three aromatic rings to the aromatic dicarboxylic acid is 20% by mol or more.

12. The tire according to any one of claims 1 to 11, wherein the ratio of a diamine having 7 to 12 carbon atoms to the diamine is 20% by mol or more.

13. The tire according to any one of claims 1 to 12, wherein the reinforcement cord is a hybrid cord of the polyamide multifilament and at least one fiber selected from the group consisting of a polyester fiber, a nylon fiber, an aramid fiber, a polyketone fiber, a glass fiber, a carbon fiber, a poly-p-phenylenebenzobisoxazole fiber and a polyarylate fiber.

14. The tire according to any one of claims 1 to 13, wherein the reinforcement cord taken out from the tire has a primary twist coefficient $\alpha 1$ of 0.1 to 0.9 and a final twist coefficient $\alpha 2$ of 0.1 to 1.2, as represented by the following expressions (1) and (2):

$$\alpha 1 = N1 \times \sqrt{(0.125 \times D1/\rho)} \times 10^{-3} \quad (1)$$

$$\alpha 2 = N2 \times \sqrt{(0.125 \times D2/\rho)} \times 10^{-3} \quad (2)$$

where N1 represents the number of primary twists [twists/10 cm], D1 represents the fineness [dtex] of one primary twist yarn, N2 represents the number of final twists [twists/10 cm], D2 represents the total fineness [dtex] of the cord, and p represents the density [g/cm$^3$] of the reinforcement cord.

15. The tire according to claim 14, wherein the $\alpha 1$ is 0.1 to 0.5 and the $\alpha 2$ is 0.1 to 0.7.

16. The tire according to any one of claims 1 to 15, wherein the total fineness of the reinforcement cord is 1000 to 8000 dtex.

17. The tire according to any one of claims 14 to 16, wherein the number N1 of primary twists in the reinforcement cord is 10 to 30 twists/10 cm.

18. The tire according to any one of claims 14 to 17, wherein the number N2 of final twists in the reinforcement cord is 10 to 30 twists/10 cm.

**19.** The tire according to any one of claims 1 to 18, wherein the belt reinforcement layer is at least one of a cap layer placed wider than the entire width of the belt and a pair of layered layers covering both end portions of the belt.

**20.** The tire according to any one of claims 1 to 19, wherein
the belt layer is obtained by coating a metal cord, including a bundle of 2 to 10 metal filaments not twisted but arranged in parallel in one row, with an elastomer, and
at least one pair of adjacent metal filaments different in at least one of the amount of shaping and the shaping pitch in a direction perpendicular to the extending direction of the metal filaments is present in the metal cord.

**21.** The tire according to claim 20, wherein the shaping direction of metal filaments shaped in the metal cord is the width direction of the metal cord.

**22.** The tire according to claim 20 or 21, wherein the elastomer coverage in a side surface in the width direction of the metal cord, of the adjacent metal filaments, is 10% or more per 50 mm.

**23.** The tire according to any one of claims 20 to 22, wherein at least one metal filament in the metal cord is a substantially straight metal filament.

**24.** The tire according to claim 23, wherein the straight metal filament and a metal filament shaped are alternately placed.

**25.** The tire according to claim 23 or 24, wherein metal filaments placed at both ends of the metal cord are each the straight metal filament.

**26.** The tire according to any one of claims 20 to 25, wherein the amount of shaping of the metal filaments is 0.03 to 0.30 mm and the shaping pitch of the metal filaments is 2 to 30 mm.

**27.** The tire according to any one of claims 1 to 19, wherein
the belt layer is obtained by coating a metal cord, including a bundle of 2 to 10 metal filaments not twisted but arranged in parallel in one row, with an elastomer, and
the metal filaments are shaped at the same amount of shaping and the same pitch and at least one pair of metal filaments different in phase between adjacent metal filaments is present in the metal cord.

**28.** The tire according to claim 27, wherein the phase difference between the adjacent metal filaments is $\pi/4$ to $7\pi/4$.

**29.** The tire according to claim 27 or 28, wherein the elastomer coverage in a side surface in the width direction of the metal cord, of the adjacent metal filaments, is 10% or more per unit length.

**30.** The tire according to any one of claims 27 to 29, wherein the amount of shaping of the metal filaments is 0.03 to 0.30 mm and the shaping pitch of the metal filaments is 2 to 10 mm.

**31.** The tire according to any one of claims 1 to 30, for use in a passenger car.

FIG. 1

FIG. 2

FIG. 3

22

21a
21b } 21

FIG. 4

21
21a  21b
22

FIG. 5

p

h

21

FIG. 6

FIG. 7

FIG. 8

FIG. 9

FIG. 10

FIG. 11

FIG. 12

<table>
<tr><td colspan="2" style="text-align:center">**INTERNATIONAL SEARCH REPORT**</td><td>International application No.<br><br>PCT/JP2019/040768</td></tr>
</table>

**A. CLASSIFICATION OF SUBJECT MATTER**

Int.Cl. B60C9/00(2006.01)i, B60C9/20(2006.01)i, B60C9/22(2006.01)i, D02G3/28(2006.01)i, D02G3/48(2006.01)i, D07B1/02(2006.01)i, D07B1/06(2006.01)i

According to International Patent Classification (IPC) or to both national classification and IPC

**B. FIELDS SEARCHED**

Minimum documentation searched (classification system followed by classification symbols)

Int.Cl. B60C9/00, B60C9/20, B60C9/22, D02G3/28, D02G3/48, D07B1/02, D07B1/06

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>Y<br><br>A | JP 2014-88120 A (BRIDGESTONE CORPORATION) 15 May 2014, claims, paragraphs [0014], [0016], [0020], [0026] (Family: none) | 1-2, 8-9, 19, 31<br>20, 22-23, 26-29<br>3-7, 10-18, 21, 24-25, 30 |

☒ Further documents are listed in the continuation of Box C.    ☐ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>19 December 2019 (19.12.2019) | Date of mailing of the international search report<br>07 January 2019 (07.01.2019) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |

Form PCT/ISA/210 (second sheet) (January 2015)

**INTERNATIONAL SEARCH REPORT**

International application No.

PCT/JP2019/040768

C (Continuation).  DOCUMENTS CONSIDERED TO BE RELEVANT

| Category* | Citation of document, with indication, where appropriate, of the relevant passages | Relevant to claim No. |
|---|---|---|
| X | JP 2017-141002 A (THE YOKOHAMA RUBBER CO., LTD.) 17 August 2017, claims, paragraphs [0021], [0025], [0033]-[0034], [0055], [0061], [0070] (Family: none) | 1-4, 12-13, 19, 31 |
| Y | | 20, 22-23, 26-29 |
| A | | 5-11, 14-18, 21, 24-25, 30 |
| X | JP 2017-141005 A (THE YOKOHAMA RUBBER CO., LTD.) 17 August 2017, claims, paragraphs [0041]-[0042], [0063], [0069], [0078] (Family: none) | 1-4, 12-13, 31 |
| Y | | 20, 22-23, 26-29 |
| A | | 5-11, 14-19, 21, 24-25, 30 |
| X | WO 2018/038050 A1 (BRIDGESTONE CORPORATION) 01 March 2018, paragraphs [0028]-[0029], [0080], claims & US 2019/0184750 A1, paragraphs [0056]-[0060], [0195], claims & JP 2018-31086 A & EP 3505663 A1 & CN 109642355 A | 1-3, 12, 19, 31 |
| Y | | 20, 22-23, 26-29 |
| A | | 4-11, 13-18, 21, 24-25, 30 |
| X | JP 2000-185512 A (BRIDGESTONE CORPORATION) 04 July 2000, table 3 (Family: none) | 1, 8-9, 14-18 |
| Y | | 20, 22-23, 26-29 |
| A | | 2-7, 10-13, 19, 21, 24-25, 30-31 |
| X | JP 2001-80316 A (BRIDGESTONE CORPORATION) 27 March 2001, paragraphs [0029], [0037] (Family: none) | 1, 8-9, 14-18 |
| Y | | 20, 22-23, 26-29 |
| A | | 2-7, 10-13, 19, 21, 24-25, 30-31 |
| Y | JP 7-157986 A (TOKYO ROPE MFG. CO., LTD.) 20 June 1995, claims, paragraphs [0005], [0012], [0019]-[0023], [0028]-[0034] (Family: none) | 20, 22-23, 26 |
| Y | JP 9-13288 A (BRIDGESTONE CORPORATION) 14 January 1997, claims, examples, paragraph [0025], drawings (Family: none) | 27-29 |

Form PCT/ISA/210 (continuation of second sheet) (January 2015)

**INTERNATIONAL SEARCH REPORT**

| International application No. |
| --- |
| PCT/JP2019/040768 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | EP 0588780 A1 (SEMPERIT REIFEN AKTIENGESELLSCHAFT) 23 March 1994, entire text & AT 139490 T | 1-31 |
| A | JP 2012-106570 A (TOYO TIRE AND RUBBER CO., LTD.) 07 June 2012, entire text (Family: none) | 1-31 |
| A | JP 5-338406 A (BRIDGESTONE CORPORATION) 21 December 1993, entire text & EP 573237 A1, whole document | 1-31 |

Form PCT/ISA/210 (continuation of second sheet) (January 2015)

**EP 3 868 572 A1**

## REFERENCES CITED IN THE DESCRIPTION

### Patent documents cited in the description

- JP 2002103913 A